# EUROPEAN PATENT SPECIFICATION

(11) **EP 3 032 068 B1**
(45) Date of publication and mention of the grant of the patent: **22.05.2019**
(21) Application number: 15199416.7
(22) Date of filing: 10.12.2015
(51) Int. Cl.: F02C 3/14, F02C 7/143, F02K 3/115, F02K 3/06, F02C 7/36

(54) **REVERSE CORE FLOW GAS TURBINE ENGINE**
GASTURBINENMOTOR MIT UMGEKEHRTER KERNSTRÖMUNG
MOTEUR DE TURBINE À GAZ À FLUX PRIMAIRE INVERSE

(30) Priority: 12.12.2014 US 201462091035 P
(43) Date of publication of application: 15.06.2016
(73) Proprietor: United Technologies Corporation, Farmington, CT 06032 (US)
(72) Inventor: HANRAHAN, Paul R., Farmington, CT Connecticut 06032 (US); KUPRATIS, Daniel Bernard, Wallingford, CT Connecticut 06492 (US)
(74) Representative: Dehns

(56) References cited:
- EP-A2- 2 295 763
- US-A1- 2013 255 224
- US-A1- 2014 260 180

## Description

### BACKGROUND

This disclosure relates to a reverse core flow gas turbine engine with efficient propulsor and core section arrangements.

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads, such as a fan section.

The fan section is arranged in a bypass flow path. The core section, which is fluidly downstream from the fan section, provides a core flow path. The compressor section, combustor section and turbine section is arranged in the core flow path.

One typical gas turbine engine architecture provides its compressor section, combustor section and turbine section axially with respect to one another. Another type of engine, referred to as a reverse core flow gas turbine engine, includes a propulsor section in addition to the core section. The core flow is turned 180° to flow in a forward direction, which is the opposite of a typical engine, before being exhausted into the bypass flow path. A reverse core flow engine has some potential advantages over a typical gas turbine engine, which may provide some additional engine operating efficiency. It is desirable to further improve the efficiency of reverse core flow gas turbine engines.

EP 2295763 A2 discloses a prior art reverse flow gas turbine engine in accordance with the preamble of claim 1.

US 2013/255224 A1 discloses a prior art gas turbine engine.

### SUMMARY

According to the invention, there is provided a reverse flow gas turbine engine as set forth in claim 1.

In an embodiment of the above, the core section includes a core compressor section and a core turbine section. The core compressor section includes low and high pressure core compressors. The core turbine section includes low and high pressure core turbines. The low pressure core compressor and the low pressure core turbine are mounted on a low speed core spool. The high pressure core compressor and the high pressure core turbine are mounted on a high speed core spool that is concentric with the low speed core spool.

In a further embodiment of any of the above, the core section includes a combustor section that is fluidly arranged between the high pressure core compressor and the high pressure core turbine.

In a further embodiment of any of the above, the reverse flow duct is fluidly arranged between the propulsor compressor section and the low pressure core compressor.

In a further embodiment of any of the above, the intercooler extends more than 50% of a total axial length of the core section.

In a further embodiment of any of the above, the propulsor turbine section includes a power turbine and a propulsor turbine that are fluidly arranged downstream from the power turbine. The power turbine is mounted to a high speed propulsor spool. The propulsor turbine is mounted to a low speed propulsor spool.

In a further embodiment of any of the above, the fan section is driven by at least one of the power turbine and propulsor turbine through the geared architecture.

In a further embodiment of any of the above, the fan section, the propulsor compressor section and the core compressor section provides an overall pressure ratio of 100 or greater.

In a further embodiment of any of the above, each of the low and high speed core spools and the high speed propulsor spool provides a compression ratio of greater than or equal to 3:1, but less than or equal to 6:1.

In a further embodiment of any of the above, there is an engine static structure. The geared architecture is an epicyclic gear train. The epicyclic gear train includes a sun gear that intermeshes with intermediate gears that are mounted to a carrier. A ring gear surrounds and intermeshes with the intermediate gears.

In an embodiment of the above, the power turbine drives the sun gear. The ring gear is grounded to the engine static structure. The carrier drives the fan.

In an alternative embodiment to the above, the power turbine drives the sun gear. The carrier drives the propulsor compressor and the propulsor turbine. The ring gear drives the fan.

In an alternative embodiment to the above, the power turbine drives the sun gear. The carrier is grounded to the engine static structure. The ring gear drives the fan, propulsor compressor, and the propulsor turbine.

In an alternative embodiment to the above, the power turbine drives the sun gear. The carrier is grounded to the engine static structure. The ring gear drives the fan.

In an alternative embodiment to the above, the power turbine drives the sun gear. The ring gear is grounded to the engine static structure. The carrier drives the fan, propulsor compressor, and the propulsor turbine.

In an alternative embodiment to the above, the power turbine drives the sun gear. The carrier drives the propulsor compressor and the propulsor turbine. The ring gear drives the fan.

In an alternative embodiment to the above, the power turbine drives the carrier. The sun gear drives the propulsor compressor and the propulsor turbine. The ring gear drives the fan.

### BRIEF DESCRIPTION OF THE DRAWINGS

The disclosure can be further understood by reference to the following detailed description when considered in connection with the accompanying drawings wherein:
Figure 1 schematically illustrates a reverse flow gas turbine engine embodiment with a geared architecture and an intercooler.
Figure 2 schematically illustrates a reverse flow gas turbine engine embodiment similar to that shown in Figure 1, but with another geared architecture.
Figure 3A schematically illustrates a reverse flow gas turbine engine embodiment similar to that shown in Figure 1, but with another intercooler.
Figure 3B schematically illustrates a cross-section of the intercooler shown in Figure 3A.
Figure 4A schematically depicts the geared architecture shown in Figures 1 and 3A.
Figure 4B schematically depicts the geared architecture shown in Figure 2.
Figure 4C schematically depicts another geared architecture embodiment.
Figure 4D schematically depicts another geared architecture embodiment.
Figure 4E schematically depicts another geared architecture embodiment.
Figure 4F schematically depicts another geared architecture embodiment.
Figure 4G schematically depicts another geared architecture embodiment.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

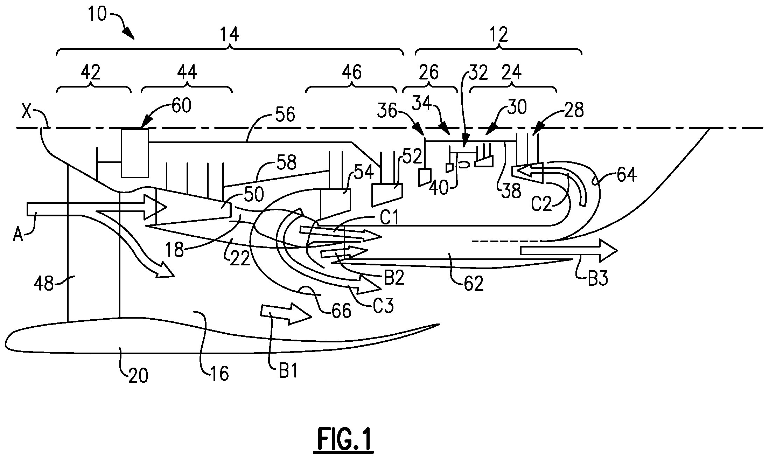

Figure 1 schematically illustrates a reverse core flow gas turbine engine 10. The gas turbine engine 10 disclosed herein has a core section 12 and a propulsor section 14. Alternative engines might include an augmenter section (not shown) among other systems or features. The core section includes a core flow path 18. A bypass flow path 16 is provided between fan and core nacelles 20, 22 and circumscribes the core flow path 18.

The core section 12 includes a core compressor section 24, and a core turbine section 26 is arranged fluidly downstream from the core compressor section 24. The core compressor section 24 includes first (low pressure) core and second (high pressure) core 28, 30 compressors respectively mounted on concentric first (low speed) and second (high speed) core spools 38, 40, which are in a two-spool arrangement. A combustor section 32 is arranged axially between the core compressor and core turbine sections 24, 26. The core turbine section 26 includes first (high pressure) and second (low pressure) core turbines 34, 36 mounted to the high and low speed core spools 40, 38, respectively. Each of the core compressors 28, 30 and core turbines 34, 36 includes one or more fixed and/or rotating stages.

The propulsor section 14 includes a fan section 42, a propulsor compressor section 44 and a propulsor turbine section 46. The propulsor fan section 42 includes a fan 48 arranged in the bypass flow path 16. The propulsor compressor section 44 includes a propulsor compressor 50 immediately fluidly downstream from the fan 48. The propulsor turbine section 46 includes a power turbine 52 and a propulsor turbine 54 arranged fluidly downstream from the power turbine 52. The propulsor section 14 has a two-spool arrangement in which the power turbine 52 is mounted on a first (high) propulsor spool 56 and the propulsor compressor 50 and propulsor turbine 54 is mounted on a second (low) propulsor spool 58.

In one embodiment, the fan 42 provides a substantial amount of thrust provided by the engine 10. That is, a significant amount of thrust is provided by the bypass flow due to a high bypass ratio compared to the core flow. The fan section 42 of the engine 10 is designed for a particular flight condition-typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system.

The fan section 42 has a low fan pressure ratio, which is disclosed herein according to one non-limiting embodiment as less than about 1.55. In another non-limiting embodiment the low fan pressure ratio is less than about 1.45. In another non-limiting embodiment the low fan pressure ratio is from 1.1 to 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1200 ft/second (365.7 meters/second).

A geared architecture 60 is coupled to the fan 48 to reduce the speed of the fan. The engine 10 in one example is a high-bypass geared aircraft engine. In a further example, the engine 10 bypass ratio is greater than about six (6:1), with an example embodiment being greater than about ten (10:1). The geared architecture 60 may be an epicyclic gear train, such as a planetary gear system, star gear system, differential gear system or other gear system. In one example, the geared architecture provides a gear reduction ratio of greater than about 2.3:1. It should be understood, however, that the above parameters are only exemplary of one embodiment of a geared architecture engine and that the present arrangement is applicable to other gas turbine engines including direct drive turbofans.

During engine operation, air A enters the engine 10 and flows into the bypass and core flow paths 16, 18. The fan section 42 drives air along the bypass flow path 16 in a bypass duct defined within the fan nacelle 20, while the propulsor compressor section 44 drives core flow C1 along the core flow path 18 for further compression and communication in the core section 12.

Most of the bypass flow B1 travels through the bypass flow path 16 to provide propulsion. Some of the bypass flow B2 is diverted to an intercooler 62, which cools the compressed air from the propulsor compressor 50, before the bypass flow B3 is expelled from the engine to supplement the propulsive effect of the bypass flow B1.

The cooled compressed core flow C2 turns 180° through the reverse duct 64 and enters the core compressor section 24. The core flow C2 is compressed by the low pressure core compressor 28 then the high pressure core compressor 30, mixed and burned with fuel in the combustor 32, then expanded over the high pressure core turbine 34 and low pressure core turbine 36. The core turbines 36, 34 rotationally drive the respective low speed spool 38 and high speed spool 40 in response to the expansion.

The expanding core flow C3 passes through the propulsor turbine section 46, first through the power turbine 52 and then the propulsor turbine 54. In the embodiment shown in Figure 1, the power turbine 52 rotationally drives the fan section 42 through the geared architecture 60, and the propulsor turbine 54 rotationally drives the propulsor compressor 50. The core flow C3 is turned 180° and expelled into the bypass flow path 16.

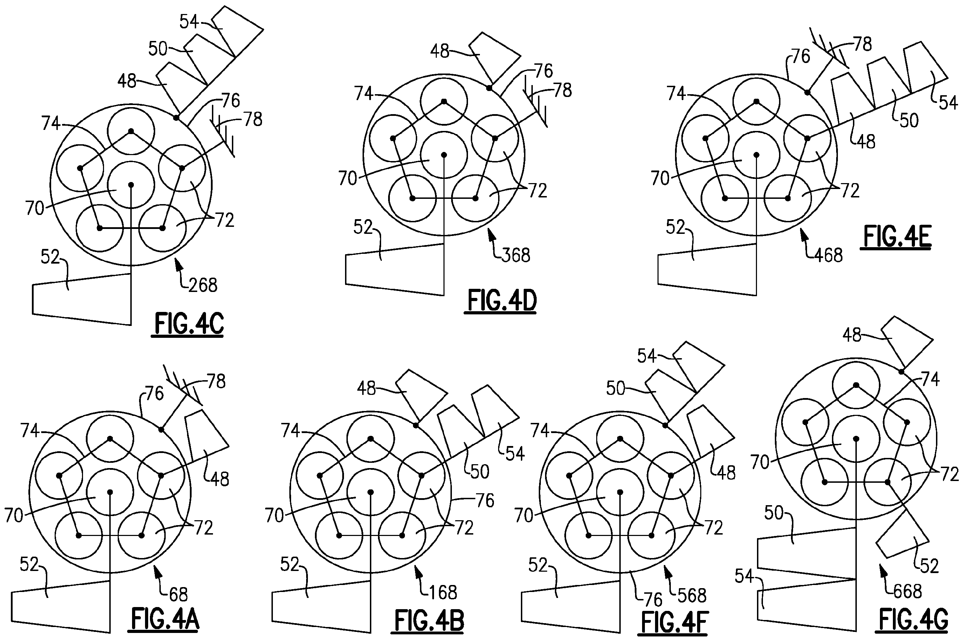

One example geared architecture 60 is shown in more detail in Figure 4A. The geared architecture is an epicyclic gear train 68. The epicyclic gear train 68 includes a sun gear 70 intermeshing with intermediate gears 72 mounted to a carrier 74. A ring gear 76 surrounds and intermeshes with the intermediate gears 72. With reference to Figures 1 and 4A, the power turbine 52 drives the sun gear 70, and the ring gear 76 is grounded to the engine static structure 78. The carrier 74 drives the fan 48.

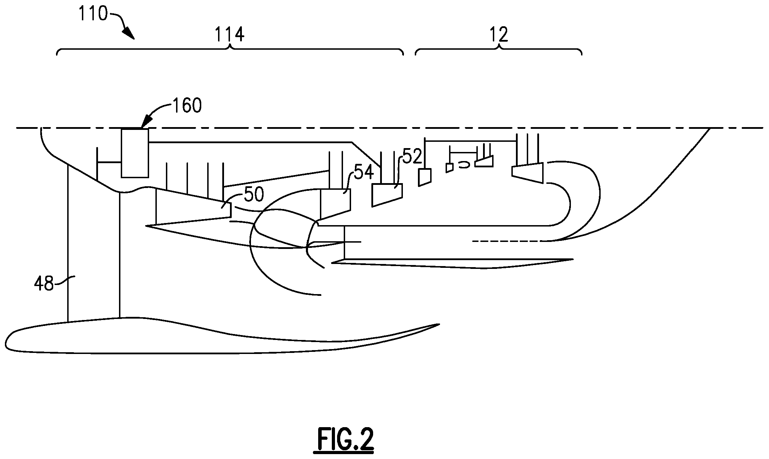

Referring to the engine 110 in Figure 2, the propulsor section 114 includes a differential geared architecture 160, which is shown in more detail as epicyclic gear train 168 in Figure 4B. The power turbine 52 drives the sun gear 70. The carrier 74 drives the propulsor compressor and turbine 50, 54, and the ring gear 76 drives the fan 48.

Other epicyclic gear trains 268, 368, 468, 568, 668 are shown in Figures 4C-4G. Referring to Figure 4C, the power turbine 52 drives the sun gear 70. The carrier 74 is grounded to the engine static structure 78, and the ring gear 76 drives the fan 48 and propulsor compressor and turbine 50, 54. Referring to Figure 4D, the power turbine 52 drives the sun gear 70. The carrier 74 is grounded to the engine static structure 78, and the ring gear 48 drives the fan 48. Referring to Figure 4E, the power turbine 52 drives the sun gear 70. The ring gear 76 is grounded to the engine static structure 78, and the carrier 74 drives the fan 48 and propulsor compressor and turbine 50, 54. Referring to Figure 4F, the power turbine drives the sun gear 70. The carrier 74 drives the fan 48, and the ring gear 76 drives the propulsor compressor and turbine 50, 54. Referring to Figure 4G, the power turbine 52 drives the carrier 74. The sun gear 70 drives the propulsor compressor and turbine 50, 54, and the ring gear drives the fan 48. In this configuration, the shaft 56 of the turbine 52 is nested concentrically inside the spool 58. The shaft 56 passes inside the bore of the sun gear 70 and reaches to the front side of the gear train 668 and connects to the planet carrier 74.

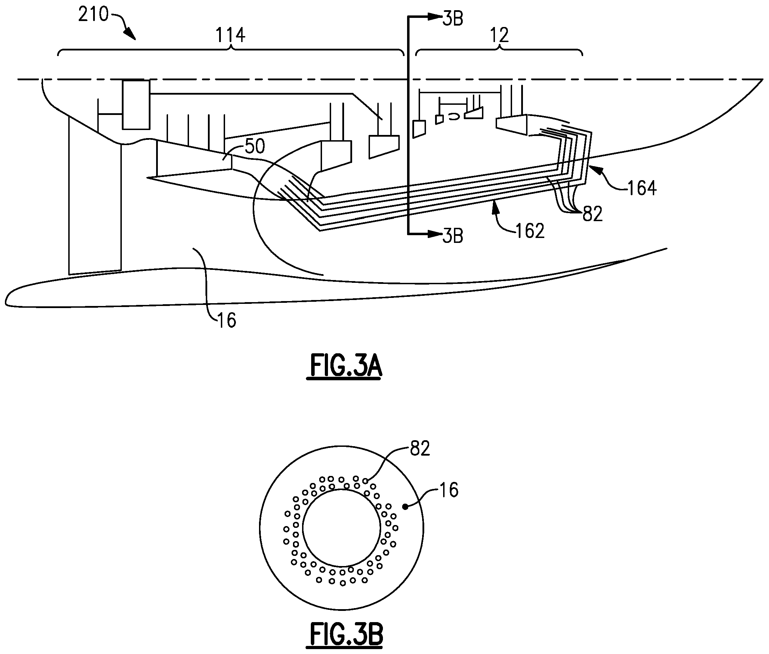

In accordance with the invention, the intercooler 62 is a tube heat exchanger. In the example, the intercooler 62 extends a substantial portion of a total axial length of the core section 12, for example, more than 50%. A tube heat exchanger configuration is shown in Figures 3A and 3B. The intercooler 162 includes multiple tubes 82 that are arranged in the bypass flow path 16 to provide increased surface area and improved cooling of the core flow entering the core section 12. The tubes 82 can be arranged in any desired configuration and provide the reverse duct 164.

In one example embodiment, the engine 10 has an overall pressure ratio (OPR) of about 100 or greater at operating temperatures similar to conventional non-reverse core flow gas turbine engines. The OPR is the total compression through the fan section 42, the propulsor compressor section 44 and the core compressor section 24. High OPR's enable smaller engine core sizes. Each compressor 50, 28, 30 provides a substantively similar pressure ratio, for example, greater than or equal to 3:1 but less than or equal to 6:1, and in another example, nominally 4:1 or 5:1. This low per-spool compression minimizes the number of variable vanes for maximum efficiency, and minimizes the total number of airfoils for reduced cost.

Each of the core and propulsor sections 12, 14 has a pair of nested spools 38, 40 and 56, 58. This minimizes the axial distance between each spool's compressor and turbine, 48 to 52, 50 to 54, 28 to 36, and 30 to 34, to avoid any rotordynamic issues that are inherent in the long shafts necessitated by long compressors or by nesting three or more spools. This arrangement also permits the rear engine mount to be placed in front of the smallest spools 38 and 40, removing them from the backbone bending of the engine static structure. With minimal structural bending, tighter tip clearances and improved aerodynamic efficiency can be maintained.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. A reverse flow gas turbine engine (10;110) comprising:
a propulsor section (14;114) includes a propulsor compressor section (44) and a propulsor turbine section (46), wherein the propulsor section (14;114) includes a fan section (42) and a geared architecture (60), the fan section (42) driven by the propulsor turbine section (46);
wherein a core section (12) is arranged fluidly between the propulsor compressor section (44) and the propulsor turbine section (46), the core section (12) includes a reverse flow duct (64; 164) that reverses a core flow through the core section (12), wherein at least one of the propulsor section (14;114) and the core section (12) has a two-spool arrangement; and
an intercooler (162) is arranged upstream from the reverse flow duct (64; 164) and downstream from the propulsor compressor section (14;114);
**characterised in that**:
the intercooler (162) is a tube heat exchanger; and
the intercooler (162) provides the reverse flow duct (64; 164).

2. The engine according to claim 1, wherein the core section (12) includes a core compressor section (24) and a core turbine section (26), the core compressor section (24) includes low and high pressure core compressors (28,30), and the core turbine section (26) includes low and high pressure core turbines (36,34), the low pressure core compressor (28) and the low pressure core turbine (36) mounted on a low speed core spool (38), and the high pressure core compressor (30) and the high pressure core turbine (34) mounted on a high speed core spool (40) that is concentric with the low speed core spool (38).

3. The engine according to claim 2, wherein the core section (12) includes a combustor section (32) fluidly arranged between the high pressure core compressor (30) and the high pressure core turbine (34).

4. The engine according to claim 2 or 3, wherein the reverse flow duct (64) is fluidly arranged between the propulsor compressor section (14;114) and the low pressure core compressor (28).

5. The engine according to any of claims 2 to 4, wherein the propulsor turbine section (46) includes a power turbine (52) and a propulsor turbine (54) fluidly arranged downstream from the power turbine (52), the power turbine (52) being mounted to a high speed propulsor spool (56), and the propulsor turbine (54) mounted to a low speed propulsor spool (58).

6. The engine according to claim 5, wherein the fan section (42) is driven by at least one of the power turbine (52) and propulsor turbine (54) through the geared architecture (60).

7. The engine according to claim 5 or 6, wherein the fan section (42), the propulsor compressor section (44) and the core compressor section (24) provides an overall pressure ratio of 100 or greater.

8. The engine according to claim 7, wherein each of the low and high speed core spools (38,40) and the high speed propulsor spool (56) provides a compression ratio of greater than or equal to 3:1, but less than or equal to 6:1.

9. The engine according to any of claims 5 to 8, comprising an engine static structure (78), wherein the geared architecture (60) is an epicyclic gear train (68), the epicyclic gear train (68) including a sun gear (70) intermeshing with intermediate gears (72) mounted to a carrier (74), and a ring gear (76) surrounding and intermeshing with the intermediate gears (72).

10. The engine according to claim 9, wherein the power turbine (52) drives the sun gear (70), and the ring gear (76) is grounded to the engine static structure (78), and the carrier (74) drives the fan (42).

11. The engine according to claim 10, wherein the power turbine (52) drives the sun gear (70), the ring gear (76) drives a propulsor compressor (50) and the propulsor turbine (54), and the carrier (74) drives the fan (42); or
wherein the power turbine (52) drives the sun gear (70), the carrier (74) is grounded to the engine static structure (78), and the ring gear (76) drives the fan (42), a propulsor compressor (50), and the propulsor turbine (54).

12. The engine according to claim 10, wherein the power turbine (52) drives the sun gear (70), the carrier (74) is grounded to the engine static structure (78), and the ring gear (76) drives the fan (42); or
wherein the power turbine (52) drives the sun gear (70), the ring gear (76) is grounded to the engine static structure (78), and the carrier (74) drives the fan (42), propulsor compressor (50), and the propulsor turbine(54).

13. The engine according to claim 10, wherein the power turbine (52) drives the sun gear (70), the carrier (74) drives the propulsor compressor (50) and the propulsor turbine (54), and the ring gear (76) drives the fan (42).

14. The engine according to claim 10, wherein the power turbine (52) drives the carrier (74), the sun gear (70) drives the propulsor compressor (50) and the propulsor turbine (54), and the ring gear (76) drives the fan (42).

15. The engine according to any preceding claim, wherein the intercooler (162) extends more than 50% of a total axial length of the core section (12).

## Patentansprüche

1. Gasturbinentriebwerk (10; 110) mit umgekehrter Strömung, das Folgendes umfasst:
einen Propellerantriebsbereich (14; 114), der einen Propellerantriebsverdichterbereich (44) und einen Propellerantriebsturbinenbereich (46) einschließt, wobei der Propellerantriebsbereich (14; 114) einen Lüfterbereich (42) und eine Getriebearchitektur (60) einschließt, wobei der Lüfterbereich (42) durch den Propellerantriebsturbinenbereich (46) angetrieben wird;
wobei ein Kernbereich (12) fluidisch zwischen dem Propellerantriebsverdichterbereich (44) und dem Propellerantriebsturbinenbereich (46) angeordnet ist, wobei der Kernbereich (12) einen Strömungsumkehrkanal (64; 164) einschließt, der eine Kernströmung durch den Kernbereich (12) umkehrt, wobei mindestens eines von dem Propellerantriebsbereich (14; 114) und dem Kernbereich (12) eine Zweiwellenanordnung aufweist; und
einen Zwischenkühler (162), der stromaufwärts von dem Strömungsumkehrkanal (64; 164) und stromabwärts von dem Propellerantriebsverdichterbereich (14; 114) angeordnet ist;
**dadurch gekennzeichnet, dass**:
der Zwischenkühler (162) ein Rohrwärmetauscher ist; und
der Zwischenkühler (162) den Strömungsumkehrkanal (64; 164) bereitstellt.

2. Triebwerk nach Anspruch 1, wobei der Kernbereich (12) einen Kernverdichterbereich (24) und einen Kernturbinenbereich (26) einschließt, wobei der Kernverdichterbereich (24) einen Nieder- und einen Hochdruckkernverdichter (28, 30) einschließt und der Kernturbinenbereich (26) eine Nieder- und eine Hochdruckkernturbine (36, 34) einschließt, wobei der Niederdruckkernverdichter (28) und die Niederdruckkernturbine (36) auf einer Niedergeschwindigkeitskernwelle (38) befestigt sind und der Hochdruckkernverdichter (30) und die Hochdruckkernturbine (34) auf einer Hochgeschwindigkeitskernwelle (40) befestigt sind, die mit der Niedergeschwindigkeitskernwelle (38) konzentrisch ist.

3. Triebwerk nach Anspruch 2, wobei der Kernbereich (12) einen Brennerbereich (32) einschließt, der fluidisch zwischen dem Hochdruckkernverdichter (30) und der Hochdruckkernturbine (34) angeordnet ist.

4. Triebwerk nach Anspruch 2 oder 3, wobei der Strömungsumkehrkanal (64) fluidisch zwischen dem Propellerantriebsverdichterbereich (14; 114) und dem Niederdruckkernverdichter (28) angeordnet ist.

5. Triebwerk nach einem der Ansprüche 2 bis 4, wobei der Propellerantriebsturbinenbereich (46) eine Leistungsturbine (52) und eine Propellerantriebsturbine (54) einschließt, die fluidisch stromabwärts von der Leistungsturbine (52) angeordnet ist, wobei die Leistungsturbine (52) an einer Propellerantriebshochgeschwindigkeitswelle (56) befestigt ist und die Propellerantriebsturbine (54) an einer Propellerantriebsniedergeschwindigkeitswelle (58) befestigt ist.

6. Triebwerk nach Anspruch 5, wobei der Lüfterbereich (42) von mindestens einem von der Leistungsturbine (52) und der Propellerantriebturbine (54) durch die Getriebearchitektur (60) angetrieben wird.

7. Triebwerk nach Anspruch 5 oder 6, wobei der Lüfterbereich (42), der Propellerantriebsverdichterbereich (44) und der Kernverdichterbereich (24) ein Gesamtdruckverhältnis von 100 oder größer bereitstellen.

8. Triebwerk nach Anspruch 7, wobei jede von der Nieder- und der Hochgeschwindigkeitskernwelle (38, 40) und die Propellerantriebshochgeschwindigkeitswelle (56) ein Verdichtungsverhältnis von gleich 3:1 oder größer, jedoch gleich 6:1 oder kleiner bereitstellen.

9. Triebwerk nach einem der Ansprüche 5 bis 8, umfassend eine statische Triebwerksstruktur (78), wobei die Getriebearchitektur (60) ein epizyklischer Getriebezug (68) ist, wobei der epizyklische Getriebezug (68) ein Sonnenrad (70), das mit Zwischenzahnrädern (72), die an einem Träger (74) befestigt sind, ineinandergreift, und ein Hohlrad (76), das die Zwischenzahnräder (72) umgibt und damit eingreift, einschließt.

10. Triebwerk nach Anspruch 9, wobei die Leistungsturbine (52) das Sonnenrad (70) antreibt und das Hohlrad (76) an der statischen Triebwerksstruktur (78) fixiert ist und der Träger (74) den Lüfter (42) antreibt.

11. Triebwerk nach Anspruch 10, wobei die Leistungsturbine (52) das Sonnenrad (70) antreibt, das Hohlrad (76) einen Propellerantriebsverdichter (50) und die Propellerantriebsturbine (54) antreibt und der Träger (74) den Lüfter (42) antreibt; oder
wobei die Leistungsturbine (52) das Sonnenrad (70) antreibt, der Träger (74) an der statischen Triebwerksstruktur (78) fixiert ist und das Hohlrad (76) den Lüfter (42), den Propellerantriebsverdichter (50) und die Propellerantriebsturbine (54) antreibt.

12. Triebwerk nach Anspruch 10, wobei die Leistungsturbine (52) das Sonnenrad (70) antreibt, der Träger (74) an der statischen Triebwerksstruktur (78) fixiert ist und das Hohlrad (76) den Lüfter (42) antreibt; oder
wobei die Leistungsturbine (52) das Sonnenrad (70) antreibt, das Hohlrad (76) an der statischen Triebwerksstruktur (78) fixiert ist und der Träger (74) den Lüfter (42), den Propellerantriebsverdichter (50) und die Propellerantriebsturbine (54) antreibt.

13. Triebwerk nach Anspruch 10, wobei die Leistungsturbine (52) das Sonnenrad (70) antreibt, der Träger (74) den Propellerantriebsverdichter (50) und die Propellerantriebsturbine (54) antreibt und das Hohlrad (76) den Lüfter (42) antreibt.

14. Triebwerk nach Anspruch 10, wobei die Leistungsturbine (52) den Träger (74) antreibt, das Sonnenrad (70) den Propellerantriebsverdichter (50) und die Propellerantriebsturbine (54) antreibt und das Hohlrad (76) den Lüfter (42) antreibt.

15. Triebwerk nach einem der vorhergehenden Ansprüche, wobei der Zwischenkühler (162) sich über mehr als 50 % einer gesamten axialen Länge des Kernbereichs (12) erstreckt.

## Revendications

1. Moteur de turbine à gaz à flux inversé (10 ; 110) comprenant :
une section propulseur (14 ; 114) inclut une section compresseur de propulseur (44) et une section turbine de propulseur (46), dans lequel la section propulseur (14 ; 114) inclut une section ventilateur (42) et une architecture à engrenages (60), la section ventilateur (42) entraînée par la section turbine de propulseur (46) ;
dans lequel une section centrale (12) est agencée en communication fluidique entre la section compresseur de propulseur (44) et la section turbine de propulseur (46), la section centrale (12) inclut une conduite de flux inversé (64 ; 164) qui inverse un flux primaire à travers la section centrale (12), dans lequel au moins une de la section propulseur (14 ; 114) et de la section centrale (12) présente un agencement à deux bobines ; et
un refroidisseur intermédiaire (162) est agencé en amont de la conduite de flux inversé (64 ; 164) et en aval de la section compresseur de propulseur (14 ; 114) ;
**caractérisé en ce que** :
le refroidisseur intermédiaire (162) est un échangeur de chaleur tubulaire ; et
le refroidisseur intermédiaire (162) fournit la conduite de flux inversé (64 ; 164).

2. Moteur selon la revendication 1, dans lequel la section centrale (12) inclut une section compresseur central (24) et une section turbine centrale (26), la section compresseur central (24) inclut des compresseurs centraux basse et haute pression (28, 30), et la section turbine centrale (26) inclut des turbines centrales basse et haute pression (36, 34), le compresseur central basse pression (28) et la turbine centrale basse pression (36) montés sur une bobine centrale basse vitesse (38), et le compresseur central haute pression (30) et la turbine centrale haute pression (34) montés sur une bobine centrale haute vitesse (40) qui est concentrique à la bobine centrale basse vitesse (38).

3. Moteur selon la revendication 2, dans lequel la section centrale (12) inclut une section chambre de combustion (32) agencée en communication fluidique entre le compresseur central haute pression (30) et la turbine centrale haute pression (34).

4. Moteur selon la revendication 2 ou 3, dans lequel la conduite de flux inversé (64) est agencée en communication fluidique entre la section compresseur de propulseur (14, 114) et le compresseur central basse pression (28).

5. Moteur selon l'une quelconque des revendications 2 à 4, dans lequel la section turbine de propulseur (46) inclut une turbine de puissance (52) et une turbine de propulseur (54) agencée en communication fluidique en aval de la turbine de puissance (52), la turbine de puissance (52) étant montée sur une bobine de propulseur haute vitesse (56), et la turbine de propulseur (54) montée sur une bobine de propulseur basse vitesse (58).

6. Moteur selon la revendication 5, dans lequel la section ventilateur (42) est entraînée par au moins une de la turbine de puissance (52) et de la turbine de propulseur (54) par l'intermédiaire de l'architecture à engrenages (60).

7. Moteur selon la revendication 5 ou 6, dans lequel la section ventilateur (42), la section compresseur de propulseur (44) et la section compresseur central (24) fournissent un rapport de pression global de 100 ou plus.

8. Moteur selon la revendication 7, dans lequel chacune des bobines centrales basse et haute vitesse (38, 40) et la bobine de propulseur haute vitesse (56) fournissent un rapport de compression supérieur ou égal à 3:1, mais inférieur ou égal à 6:1.

9. Moteur selon l'une quelconque des revendications 5 à 8, comprenant une structure statique de moteur (78), dans lequel l'architecture à engrenages (60) est un train d'engrenages épicycloïdaux (68), le train d'engrenages épicycloïdaux (68) incluant un engrenage planétaire (70) s'engrenant avec des engrenages intermédiaires (72) montés sur un support (74), et une couronne (76) entourant et s'engrenant avec les engrenages intermédiaires (72).

10. Moteur selon la revendication 9, dans lequel la turbine de puissance (52) entraîne l'engrenage planétaire (70), et la couronne (76) est reliée à la terre sur la structure statique de moteur (78), et le support (74) entraîne le ventilateur (42).

11. Moteur selon la revendication 10, dans lequel la turbine de puissance (52) entraîne l'engrenage planétaire (70), la couronne (76) entraîne un compresseur de propulseur (50) et la turbine de propulseur (54), et le support (74) entraîne le ventilateur (42) ; ou
dans lequel la turbine de puissance (52) entraîne l'engrenage planétaire (70), le support (74) est relié à la terre sur la structure statique de moteur (78), et la couronne (76) entraîne le ventilateur (42), un compresseur de propulseur (50), et la turbine de propulseur (54).

12. Moteur selon la revendication 10, dans lequel la turbine de puissance (52) entraîne l'engrenage planétaire (70), le support (74) est relié à la terre sur la structure statique de moteur (78), et la couronne (76) entraîne le ventilateur (42) ; ou
dans lequel la turbine de puissance (52) entraîne l'engrenage planétaire (70), la couronne (76) est reliée à la terre sur la structure statique de moteur (78), et le support (74) entraîne le ventilateur (42), le compresseur de propulseur (50), et la turbine de propulseur (54).

13. Moteur selon la revendication 10, dans lequel la turbine de puissance (52) entraîne l'engrenage planétaire (70), le support (74) entraîne le compresseur de propulseur (50) et la turbine de propulseur (54), et la couronne (76) entraîne le ventilateur (42).

14. Moteur selon la revendication 10, dans lequel la turbine de puissance (52) entraîne le support (74), l'engrenage planétaire (70) entraîne le compresseur de propulseur (50) et la turbine de propulseur (54), et la couronne (76) entraîne le ventilateur (42).

15. Moteur selon une quelconque revendication précédente, dans lequel le refroidisseur intermédiaire (162) s'étend sur plus de 50 % d'une longueur axiale totale de la section centrale (12).
